# EUROPÄISCHE PATENTSCHRIFT

(11) **EP 2 556 369 B1**
(45) Veröffentlichungstag und Bekanntmachung des Hinweises auf die Patenterteilung: **26.06.2019**
(21) Anmeldenummer: 11704812.4
(22) Anmeldetag: 28.02.2011
(51) Int. Cl.: G01N 27/22, B01D 53/26, G01L 9/00, G01L 19/06

(54) **RELATIVDRUCKSENSOR**
RELATIVE PRESSURE SENSOR
CAPTEUR DE PRESSION RELATIVE

(30) Priorität: 08.04.2010 DE 102010003710; 08.04.2010 DE 102010003709
(43) Veröffentlichungstag der Anmeldung: 13.02.2013
(73) Patentinhaber: Endress+Hauser SE+Co. KG, 79689 Maulburg (DE)
(72) Erfinder: WOSNITZA, Elmar, 79104 Freiburg (DE); HÜGEL, Michael, 79541 Lörrach (DE); LOPATIN, Sergej, 79540 Lörrach (DE); UEHLIN, Thomas, 79650 Schopfheim (DE); TEXTOR, Olaf, 79540 Lörrach (DE); BROCK, Hansjörg, 79639 Grenzach-Wyhlen (DE)
(74) Vertreter: Andres, Angelika Maria
(86) Internationale Anmeldenummer: PCT/EP2011/052911
(87) Internationale Veröffentlichungsnummer: WO 2011/124418

(56) Entgegenhaltungen:
- EP-A1- 1 070 948
- WO-A1-02/090916
- JP-A- 2001 108 549
- JP-A- 2001 108 549
- JP-A- 2002 206 979

## Beschreibung

Die vorliegende Erfindung betrifft einen Relativdrucksensor zur Bestimmung eines Drucks eines Mediums in Bezug auf einen Atmosphärendruck, mit einem Gehäuse, mit einem Messelement, welches in dem Gehäuse angeordnet ist, wobei eine mit dem Medium in Kontakt stehende Außenseite des Messelements mit dem zu messenden Druck beaufschlagt ist, mit einer Referenzdruckzuleitung, welche einer Innenseite des Messelements den Atmosphärendruck in Form von Umgebungsluft zuführt, mit einer Auswerteeinheit, welche aus einer mit dem Messelement bestimmten Größe den Druck des Mediums bestimmt, und mit mindestens einer in dem Gehäuse angeordneten Trocknungskammer zur Aufnahme von Luftfeuchte. Das Medium, dessen Druck zu bestimmen ist, ist hierbei flüssig oder gasförmig.

In der Druckmesstechnik sind Absolutdruck-, Differenzdruck- und Relativdrucksensoren bekannt. Absolutdrucksensoren bestimmen den vorherrschenden Druck absolut, d.h. in Bezug auf Vakuum, während Differenzdrucksensoren die Differenz zwischen zwei unterschiedlichen Drücken bestimmen. Bei Relativdrucksensoren wird der zu messende Druck gegenüber einem Referenzdruck bestimmt, wobei der in der Umgebung des Sensors vorherrschende Atmosphärendruck als Referenzdruck dient. Derartige Relativdrucksensoren weisen meist eine geschlossene Messkammer mit einer druckempfindlichen Messmembran auf, welche die Messkammer an einer Seite verschließt. Auf die Außenseite der Messmembran wirkt der zu messende Druck ein. Die Messkammer ist beispielsweise über eine Kapillare mit der Umgebung verbunden, durch welche Umgebungsluft in die Messkammer eintritt, sodass im Innern der Messkammer und somit auf der Innenseite der Messmembran der Umgebungsdruck vorliegt. In Abhängigkeit des vorliegenden Relativdrucks verbiegt sich die Messmembran. Diese Verbiegung wird mittels einer elektromechanischen Wandlereinheit in elektrische Signale umgewandelt, und aus diesen der Druck des Mediums relativ zu dem Referenzdruck bestimmt.
Zur Erzeugung der elektrischen Signale, welche den Grad der Verbiegung der Messmembran widerspiegeln, wird meist die Messmembran mit einer ersten Elektrode und die der Messmembran gegenüberliegende Seite der Messkammer mit einer zweiten, und einer dritten Elektrode versehen. Die zweite Elektrode dient als Referenzelektrode und ist derart angeordnet, dass deren Kapazität nicht von der Verbiegung der Messmembran, sondern von Temperatur, Luftfeuchtigkeit und anderen Umgebungsparametern beeinflusst wird. Die dritte Elektrode bildet mit der ersten einen Messkondensator, der für Verbiegungen der Membran besonders empfindlich ist. Die Kapazität des auf diese Weise gebildeten Kondensators ändert sich in Abhängigkeit der Verbiegung der Messmembran, sodass aus dem Wert der Kapazität der Relativdruck bestimmbar ist.

Eine weitere Gruppe von bekannten Relativsensoren weist eine Membran auf, an welcher dehnungssensitive Elemente wie Dehnungsstreifen angeordnet sind. Der Widerstand der Dehnungsstreifen ist von der Verbiegung der Membran abhängig und dient als Messsignal für die Druckauswertung.

Eine weitere Gruppe von aus dem Stand der Technik bekannten Relativsensoren weisen eine Art Biegeplatte auf, an welcher drucksensitive Elemente angeordnet sind. Diese Biegeplatte ist nicht direkt mit dem Prozessdruck beaufschlagt, sondern über einen Druckmittler mit dem Prozess in Kontakt. Der Druckmittler kann ein massiver Festkörper sein oder ein mit einer inkompressiblen Flüssigkeit, z.B. Öl, befülltes Rohr, welches durch eine drucksensitive Membran gegenüber dem Prozess abgedichtet ist.

Ein allgemeines Merkmal der beschriebenen Sensoren ist eine Membran, die sich in Abhängigkeit der Druckdifferenz auf beiden Membranseiten verbiegt. Diese Verbiegung wird nach verschiedenen Verfahren - kapazitiv oder piezoresistiv - in elektrische Signale umgewandelt.

Häufig werden Relativdrucksensoren in industriellen Prozessen eingesetzt, wo sie hohen Temperaturschwankungen und hohen Temperaturdifferenzen zwischen Prozess und Umgebung ausgesetzt sind. Bei plötzlicher Abkühlung kann der Taupunkt der Luft in einem Innenraum des Sensors überschritten werden, was zur Kondensation der Luftfeuchte auf kalten Teilen des Sensors führt. Insbesondere durch die Öffnung zur Umgebung, welche zum Bereitstellen des Referenzdrucks für das Messelement notwendig ist, kann feuchte Luft in den Sensor gelangen. Elektromechanische Wandlereinheiten sowie die Sensorelektronik sind in der Regel sehr empfindlich gegenüber Feuchte. Um eine zuverlässige Druckberechnung durchführen zu können muss daher sichergestellt sein, dass kein Feuchtekondensat in das Innere des Relativdrucksensors gelangt.

Die Offenlegungsschrift JP 2001 108 549 (A) offenbart einen optischen Relativdrucksensor zum Einsatz in einem Abwasserkanal, wobei der Sensor über eine Verzweigung in einem optischen Anschlussgehäuse mit Licht versorgt wird, wobei an das Anschlussgehäuse zudem ein Referenzluftrohr angeschlossen ist, wobei die Referenzluft durch ein Feuchte absorbierendes Teil, welches im Eingang des Referenzluftrohrs angeordnet ist, in das Innere das Anschlussgehäuse und von dort zu dem Relativdrucksensor gelangt.

Die Offenlegungsschrift JP 2002 206 979 A offenbart ein Feuchteabsorberbauteil für einen Drucksensor, welches als ein doppelwandiges Rohr ausgebildet ist, wobei das Absorbermaterial in der Ringkammer zwischen den beiden Rohrwänden angeordnet ist. Die innere Rohrwand weist Löcher auf, durch welche Feuchtigkeit zum Absorbermaterial gelangt. Das Rohr wird in der Druckeinlassöffnung des Sensors montiert.

Aus der EP 1070948 A1 ist ein Relativdrucksensor bekannt, bei welchem die Relativdruckzuleitung einen Abschnitt verbreiterten Querschnitts aufweist, in welchem sich ein hydrophiler Einsatz befindet. Dieser ist dazu bestimmt, feuchter Luft das Wasser zu entziehen, sodass nur trockene Luft zur Messkammer gelangt. Der Nachteil hierbei ist jedoch, dass bei einem hohen Durchsatz an Luft durch den hydrophilen Einsatz eine ausreichende Trocknung der Luft nicht gewährleistet ist.

Solch ein erhöhter Durchsatz tritt insbesondere bei einem signifikanten Temperaturabfall auf, da dieser zu einer starken Kompression der in der Referenzdruckzuleitung befindlichen Luft führt.

Die Aufgabe der Erfindung besteht darin, einen Relativdrucksensor bereit zu stellen, welcher auch bei starken Temperaturschwankungen gegenüber auskondensierender Feuchte geschützt ist.

Die Aufgabe wird dadurch gelöst, dass die Trocknungskammer ein feuchteadsorbierendes Material enthält oder im Wesentlichen aus dem feuchteadsorbierenden Material besteht, dass das feuchteadsorbierende Material zumindest abschnittsweise frei von einer Wandung ist, und dass die Referenzdruckzuleitung zumindest abschnittsweise aus einem feuchtedurchlässigen Material gefertigt ist, sodass feuchte Luft, welche sich in der Referenzdruckzuleitung befindet, in Kontakt mit der Trocknungskammer steht, wobei die Trocknungskammer derart ausgestaltet, dass sie eine im Gehäuse angeordnete Sensorelektronik zumindest teilweise umgibt.

Beispielsweise ist die Trocknungskammer in ihrer Form an die des Gehäuses angepasst und enthält eine Ausnehmung, in welcher die Sensorelektronik angeordnet ist. Hierdurch ist sichergestellt, dass auch die Sensorelektronik vor Feuchte geschützt ist, wenn z.B. Feuchte durch ein Leck in das Gehäuse eindringt. Es versteht sich von selbst, dass die Trocknungskammer zumindest in einem zur Sensorelektronik benachbarten Abschnitt keine Wandung oder eine feuchtedurchlässige Wandung aufzuweisen hat.

Das Messelement ist in einem Ausführungsbeispiel eine Messkammer mit einer Membran, deren Außenseite mit dem zu messenden Druck und deren Innenseite mit dem Referenzdruck beaufschlagt ist. In einem alternativen Ausführungsbeispiel besteht das Messelement aus einer Biegeplatte, auf welcher drucksensitive Elemente oder elektromechanische Wandler angeordnet sind und einem Druckmittler. An der Biegeplatte liegt der zu messende Druck oder ein mit dem zu messenden Druck in bekanntem Zusammenhang stehender Druck an. Mit anderen Worten bezieht sich die Erfindung auf die eingangs im Stand der Technik beschriebenen Relativdrucksensoren.

Erfindungsgemäß sind Relativdruckzuleitung und Trocknungskammer derart ausgestaltet und aufeinander abgestimmt, dass ein begrenzter Austausch des zu trocknenden Luftvolumens stattfindet. Die Trocknungskammer ist beispielsweise ein Sinterkörper aus dem feuchteadsorbierenden Material, welcher bevorzugt von einer Wandung umgeben ist. Je nach Ausgestaltung besteht die Wandung aus einem Material, das für Feuchte durchlässig, abschnittsweise durchlässig oder undurchlässig ist. In anderen Ausgestaltungen ist die Trocknungskammer mit einem Pulver, Granulat oder Gel aus feuchteadsorbierendem Material vollständig oder teilweise gefüllt.

Für die Ausgestaltung von Trocknungskammer und Referenzdruckzuleitung sind verschiedene Ausführungen denkbar. Beispielsweise umschließt die Trocknungskammer die Referenzdruckzuleitung in einem Teilbereich der Referenzdruckzuleitung, wobei eine für Feuchte permeable Membran in diesem Teilbereich die Wandung der Kapillare der Referenzdruckzuleitung und somit auch die Kontaktfläche zum Trocknungsmittel bildet. In einer anderen Ausgestaltung sind die Trocknungskammer und die Referenzdruckzuleitung so nebeneinander angeordnet, dass sie sich in einem Teilbereich berühren, wobei eine für Feuchte permeable Membran die Kontaktfläche bildet. Bei einer weiteren Ausgestaltung ist die Trocknungskammer im Gehäuse beabstandet von der Referenzdruckzuleitung angeordnet, wobei die Wandung der Trocknungskammer zumindest teilweise aus einem für Feuchte durchlässigen Material gefertigt ist, und die Referenzdruckzuleitung weist ebenfalls einen solchen Abschnitt auf, sodass Feuchte durch letztern austreten und in die Trocknungskammer eintreten kann. Bei dieser letztgenannten Ausführungsform wird nicht nur die in der Referenzdruckzuleitung befindliche Luft getrocknet, sondern der gesamte Innenraum des Gehäuses. Auf diese Weise ist sichergestellt, dass die Sensorelektronik vor Feuchteablagerung geschützt ist.

In einer ersten Ausgestaltung der erfindungsgemäßen Lösung liegt die Referenzdruckzuleitung mit einem Abschnitt innerhalb der Trocknungskammer und der in der Trocknungskammer befindliche Abschnitt der Referenzdruckzuleitung weist das feuchtedurchlässige Material auf.

Bei einer vorteilhaften Ausgestaltung der Erfindung weisen die Trocknungskammer und die Referenzdruckzuleitung abschnittsweise eine gemeinsame Grenzfläche auf, und das feuchteadsorbierende Material und das feuchtedurchlässige Material bilden die Grenzfläche. Die Trocknung der in der Referenzdruckzuleitung befindlichen Luft findet beschränkt auf den Bereich statt, in welchem die Referenzdruckzuleitung und die Trocknungskammer miteinander in Kontakt stehen. Wird die Grenzfläche durch ein feuchtedurchlässiges Material und nicht durch das feuchteadsorbierende Material gebildet, findet eine allmählichere Trocknung statt und eine schnelle Sättigung des Trocknungsmittels bei hohem Pumpvolumen wird vermieden.

In einer Ausgestaltung der Erfindung ist die Trocknungskammer in Form eines Einsatzes in das Gehäuse einbringbar und/oder austauschbar.
Entweder ist die Trocknungskammer selbst austauschbar oder eine zweite austauschbare Trocknungskammer ist zusätzlich in das Gehäuse eingebracht. Dies hat den Vorteil, dass die Trocknungskammer ausgetauscht werden kann, wenn das feuchteadsorbierende Material gesättigt ist, und die Trocknungsfunktion somit durch Ersetzen der Trocknungskammer wieder herstellbar ist.

Eine weitere Ausgestaltung des Relativdrucksensors sieht vor, dass die Trocknungskammer das feuchteadsorbierende Material als Formkörper oder in granularer Form enthält oder dass die Trocknungskammer ein Sinterkörper oder ein Kompositkörper aus dem feuchteadsorbierenden Material ist. Ein Kompositkörper ist ein zweiphasiger fester Stoff, bestehend aus dem feuchteadsorbierenden Material und einem weiteren Werkstoff, insbesondere einem Polymer.

Bei einer vorteilhaften Weiterbildung der Erfindung weist die Referenzdruckzuleitung eine Länge auf, welche eine Länge des Gehäuses deutlich übersteigt. Die Trocknungskammer bzw. das Austauschvolumen hingegen sind so klein wie möglich gehalten. Hierdurch wird erreicht, dass das Rohrvolumen größer ist als das Kammervolumen, bzw. das Pumpvolumen, welches bei einer Temperaturänderung bewegt wird. Mit anderen Worten ist das Volumen, welches durch den nach außen führenden Teil der Referenzdruckzuleitung definiert ist, größer als das Volumen der Luftgefüllten Zwischenräume in der Trockenkammer. Ist diese Bedingung erfüllt, so führt eine Temperaturbedingte Volumenänderung nicht zum Eindringen großer Mengen ungetrockneter Luft in die Trockenkammer, was zu einer schnellen Sättigung des feuchteadsorbierenden Materials führen würde.

Eine bevorzugte Ausgestaltung sieht vor, dass die Referenzdruckzuleitung zumindest abschnittsweise spiralförmig ausgestaltet ist. Auf diese Weise lässt sich eine lange Eingangskapillare verwirklichen, welche wenig Raum einnimmt und stabil ist.

Gemäß einer weiteren Ausgestaltung der Erfindung wird vorgeschlagen, dass das in der Trocknungskammer enthaltene feuchteadsorbierende Material ein Zeolith oder ein Silikagel ist. Ein Vorteil, den Zeolith oder Silikagel bietet, ist die Wiederverwendbarkeit, da diesen Werkstoffen durch Erhitzen die adsorbierte Feuchte wieder größtenteils entzogen werden kann. Ist die Trocknungskammer als austauschbarer Einsatz ausgestaltet, ist die Trocknungskammer somit wieder verwendbar.

In einer Ausgestaltung sind das erste und das zweite feuchtedurchlässige Material ausgewählt aus der Gruppe der Polymermaterialien. Insbesondere ist das erste und/oder das zweite feuchtedurchlässige Material Silikon, Silikonkautschuk, PVC, PTFE, Polyamid oder Polyimid.

Gemäß einer weiteren Ausgestaltung ist das in der Trocknungskammer enthaltene feuchteadsorbierende Material derart gewählt, dass das feuchteadsorbierende Material neben Feuchte auch O₃ (Ozon), NH₃ (Ammoniak), H₂S (Schwefelwasserstoff) und/oder HF (Fluorwasserstoff) adsorbiert. Ist die Adsorption dieser Stoffe wünschenswert, eignet sich Zeolith auf Grund seiner Hohlraumstruktur als feuchteadsorbierendes Material. Auf die Größe der in einem Sinterkörper aus Zeolith vorhandenen Hohlräume kann beim Herstellungsprozess Einfluss genommen werden. Wird Zeolith einem Sinterprozess unterzogen sind durch Beigabe anderer Stoffe in das zu sinternde Pulver Poren bestimmter Größe in den späteren Sinterkörper bzw. das gesinterte Granulat einbringbar. Die Stoffe verbrennen oder verdampfen vollständig und hinterlassen entsprechend große Hohlräume im Zeolith, in welche die zu adsorbierenden Stoffe leicht eindringen können.

In einer weiteren Ausgestaltung der Erfindung ist für den Fall, dass der Relativdrucksensor mehrere Gehäuse umfasst, in jedes Gehäuse mindestens eine Trocknungskammer eingebracht. Sind beispielsweise Innengehäuse in das Gehäuse des Sensors eingebracht, oder ist das Gehäuse mit einem weiteren Gehäuse verbunden, enthalten diese ebenfalls eine entsprechen ausgestaltete Trocknungskammer. Auf diese Weise ist ein umfassender Schutz aller Komponenten gewährleistet.

Eine weitere Ausgestaltung sieht vor, dass die Trocknungskammer mindestens zwei Elektroden aufweist, dass der Trocknungskammer eine Elektronikeinheit zugeordnet ist, welche die Elektroden mit einem Wechselstrom beaufschlagt und hiermit eine elektrische Kenngröße des feuchteadsorbierenden Materials ermittelt, und dass die Elektronikeinheit anhand der ermittelten elektrischen Kenngröße den Sättigungsgrad des feuchteadsorbierenden Materials bestimmt. Bei der Elektronikeinheit kann es sich hierbei um die Sensorelektronik oder um eine separate Elektronikeinheit handeln. Durch die Überwachung des Sättigungsgrads ist es ermöglicht, die Trocknungskammer durch eine neue zu ersetzen, bevor das feuchteadsorbierende Material vollständig gesättigt ist und der Schutz der Sensorelektronik vor Feuchte nicht mehr gewährleistet wäre.

Die Elektroden sind hierbei derart angeordnet, dass sie einen Kondensator bilden. Dieser dient der Ermittlung einer elektrischen Kenngröße, welche vom Anteil der im feuchteadsorbierenden Material enthaltenen Feuchte abhängig ist und in eindeutigem Zusammenhang mit diesem Anteil steht. Auf diese Weise ist eine Aussage über die bereits aufgenommene Menge des adsorbierten Stoffes möglich. Bei bekannter maximaler Sättigung des feuchteadsorbierenden Materials ist somit zudem dessen verbleibende Aufnahmekapazität für Wasser bestimmbar.

Bevorzugt wird als elektrische Kenngröße die Kapazität und/oder der Verlustfaktor tanδ ermittelt. Letzterer bezeichnet das Verhältnis von Wirkleistung zu Blindleistung und ist unabhängig von der Geometrie der Elektroden und des Körpers, in und/oder auf welchem diese angeordnet sind. Er lässt sich aus der Phasenverschiebung zwischen Strom und Spannung des Prüfkondensators, d.h. den mit Wechselspannung beaufschlagten Elektroden, folgendermaßen bestimmen: tanδ = tan(π/2 - ϕ). Aus dem Verlustfaktor ist der Sättigungsgrad des feuchteadsorbierenden Materials direkt bestimmbar.

Vorzugsweise werden die Elektroden mit einem Wechselstrom mit einer Frequenz zwischen 1 und 100 kHz beaufschlagt. Insbesondere für Zeolith ist dieser Bereich besonders vorteilhaft, da der Verlustfaktor von gesättigten Zeolithen in diesem Frequenzbereich nahezu unabhängig von der Messfrequenz ist und somit eine stabile Messung gewährleistet ist.

Die Erfindung wird anhand der nachfolgenden Figuren näher erläutert.
- Fig. 1: zeigt eine schematische Darstellung eines Trocknungssystems;
- Fig. 2: zeigt eine schematische Darstellung eines ersten Ausführungsbeispiels eines Trocknungssystems;
- Fig. 3a und 3b: zeigen eine schematische Darstellung eines zweiten Ausführungsbeispiels eines Trocknungssystems;
- Fig. 4: zeigt in einem Schnitt eine Detailansicht eines Drucksensors mit einem Trocknungssystem gemäß dem in Fig. 3a dargestellten zweiten Ausführungsbeispiel;
- Fig. 5a-c: zeigen schematisch verschiedene Elektrodenanordnungen zur Bestimmung des Sättigungsgrades einer als Formkörper ausgestalteten Trocknungskammer;
- Fig. 6: zeigt schematisch eine mit Granulat befüllte Trocknungskammer mit eingebrachtem Formkörper;
- Fig. 6a-b: zeigen schematisch Ausgestaltungen des Formkörpers nach Fig. 6.

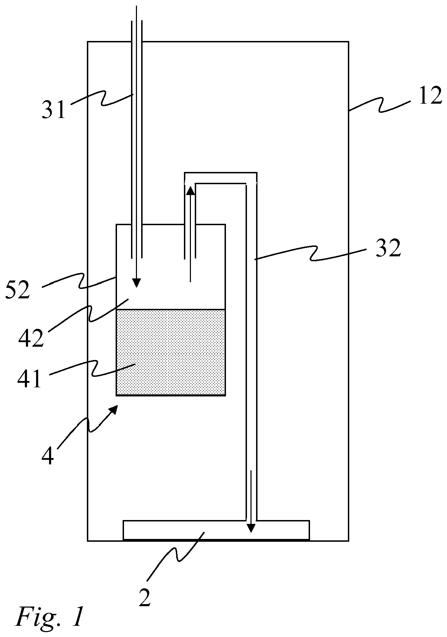

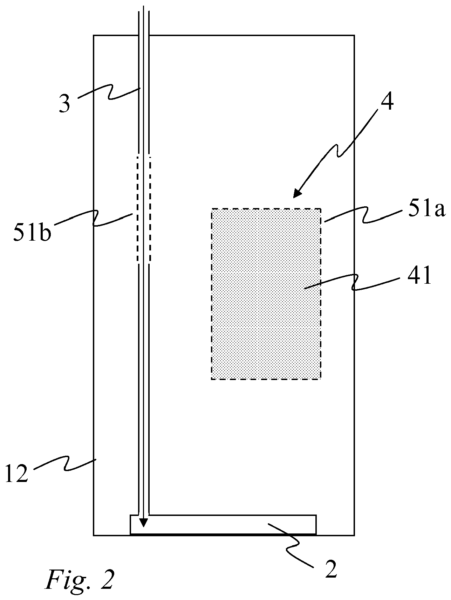

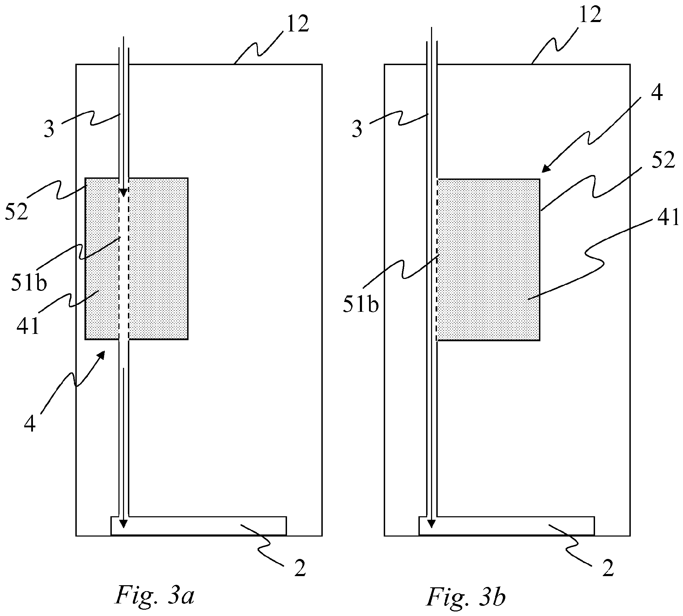

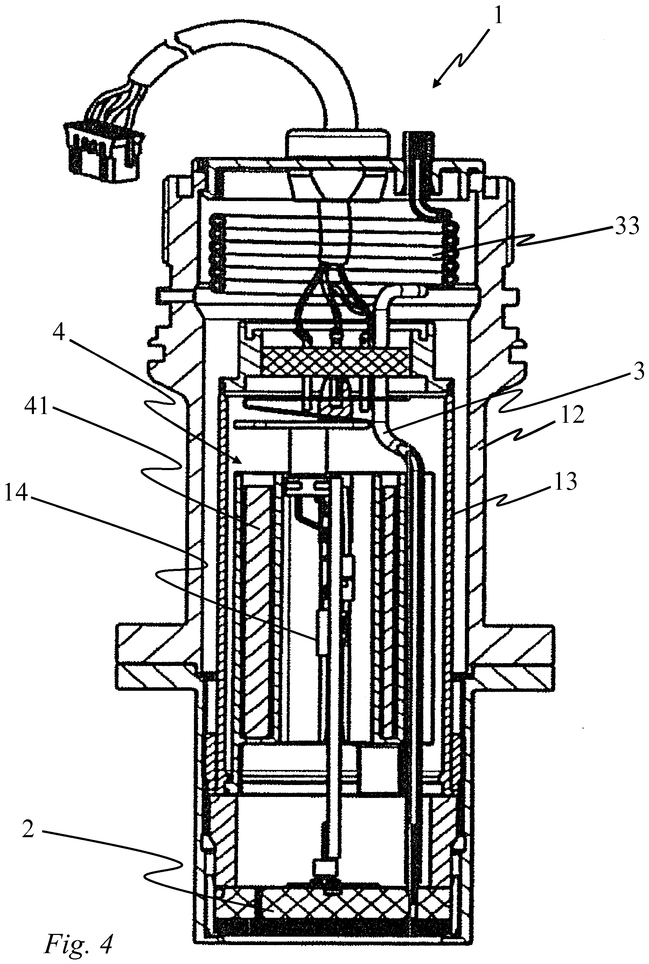

In den Figuren 1 bis 3 ist jeweils schematisch ein Gehäuse 12 mit einer darin liegenden Trocknungskammer und einer Referenzdruckzuleitung 3 dargestellt. Die Figuren 2, 3a und 3b zeigen hierbei verschiedene bevorzugte Ausgestaltungen der Trocknungskammer 4 und der Referenzdruckzuleitung 3. In Fig. 4 wird der detaillierte Aufbau eines erfindungsgemäßen Relativdrucksensors 1 anhand des in Fig. 3 gezeigten Ausführungsbeispiels erläutert. Die Ausführungsbeispiele sind anhand eines kapazitiv messenden Relativdrucksensors beschrieben. Selbstverständlich beziehen sich die Ausführungen gleichermaßen auf alternativ ausgestaltete Relativdrucksensoren, beispielsweise solche mit Druckmittlern.

In Fig. 1 ist schematisch das Gehäuse 12 eines Relativdrucksensors 1 mit einem Trocknungssystem bestehend aus Trocknungskammer 4 und Referenzdruckzuleitung 31, 32 dargestellt, bei welchem die Trocknungskammer 4 vollständig von einer feuchteundurchlässigen Wandung 52 umgeben ist, welche von der Referenzdruckzuleitung 31, 32 zweimal durchstoßen wird. Die Referenzdruckzuleitung 31, 32 ist im Inneren der Trocknungskammer 4 unterbrochen, d.h. eine erste Kapillare 31 führt in die Trocknungskammer 4 hinein und eine zweite Kapillare 32 führt wieder hinaus. Die Strömungsrichtung der Luft, welche durch die erste Kapillare 31 die Trocknungskammer 4 geleitet wird, ist durch die beiden Pfeile dargestellt. Die Trocknungskammer 4 ist nur teilweise mit einem feuchteadsorbierenden Material 41 gefüllt, sodass ein Hohlraum 42 entsteht, welcher mit dem feuchteadsorbierenden Material 41 in Kontakt steht. In einer Ausgestaltung ist das feuchteadsorbierende Material 41 von dem Hohlraum 42 durch eine für Feuchte permeable Membran getrennt. Das feuchteadsorbierende Material 41 ist bevorzugt Zeolith und liegt in Form von Granulat, Pulver oder als Sinterkörper vor. Durch die Unterbrechung in der Referenzdruckzuleitung 3 gelangt die von außen in die Referenzdruckzuleitung 3 eintretende Luft in den Hohlraum 42, wo sie für eine bestimmte Zeit zirkuliert und getrocknet wird, bevor sie durch die zweite Kapillare 32 aus der Trocknungskammer 4 austritt und durch diese der Messkammer 2 zugeführt wird. Auf diese Weise wird vermieden, dass feuchte Luft in den Bereich der Messkammer 2 vordringt und die Feuchte sich dort niederschlägt.

Fig. 2 offenbart eine erfindungsgemäße Ausgestaltung des Trocknungssystems bestehend aus Trocknungskammer 4 und Referenzdruckzuleitung 3, in welchem der gesamte Innenraum des Gehäuses 12 vor sich absetzender Feuchte geschützt ist.

Die Trocknungskammer 4 ist in diesem Ausführungsbeispiel entweder von einer feuchtedurchlässigen Wandung 51a umgeben, wobei die Wandung beispielsweise ein Granulat oder Gel aus feuchteadsorbierendem Material 41 umschließt, oder die Trocknungskammer 4 umfasst keine Wandung. In letzterem Fall ist die Trocknungskammer 4 beispielsweise ein aus einem feuchteadsorbierenden Material 41 gefertigter Sinterkörper. Weitere Ausgestaltungen sind möglich, in welchen das feuchteadsorbierende Material teilweise von einer feuchtedurchlässigen Wandung 51a und teilweise von einer feuchteundurchlässigen Wandung 52 umgeben ist. Hierdurch wird die Feuchteaufnahme des feuchteadsorbierenden Materials beschränkt und eine vorzeitige Sättigung vermieden.

Die Referenzdruckzuleitung 3 führt von der Trocknungskammer 4 beabstandet durch das Gehäuse 12 bis in die Messkammer 2 und besteht auf dem Abschnitt, welcher innerhalb des Gehäuses 12 verläuft, teilweise aus einem feuchtedurchlässigen Material. Alternativ ist die Referenzdruckzuleitung 3 auf der gesamten Länge, welche sich innerhalb des Gehäuses 12 befindet, aus einem feuchtedurchlässigen Material gefertigt. Beispielsweise ist das feuchtedurchlässige Material ein Silikon. Auf diese Weise steht die in der Referenzdruckzuleitung 3 befindliche Luft im Austausch mit der im Gehäuse 12 befindlichen Luft und wird von der Trocknungskammer 4 getrocknet. Um eine schnelle Sättigung des feuchteadsorbierenden Materials 41 der Trocknungskammer 4 zu vermeiden, ist das Gehäuse 12 des Drucksensors feuchte-und luftdicht ausgestaltet, sodass nur durch die Referenzdruckzuleitung 3 Luft in das Gehäuse 12 gelangt. Im Gegensatz zu einer aus dem Stand der Technik bekannten Variante, in welcher die Luft von der Referenzdruckzuleitung 3 in eine vollständig mit feuchteadsorbierendem Material gefüllte Trocknungskammer 4 mit dichter Wandung geführt und mittels einer zweiten Kapillare 32 von der Trocknungskammer 4 zur Messkammer 2 geleitet wird, ist in diesem Ausführungsbeispiel auch bei großem Pumpvolumen gewährleistet, dass nur trockene Luft in die Messkammer 2 gelangt.

Fig. 3a zeigt eine besonders vorteilhafte Ausgestaltung des Trocknungssystems, bei welchem die Referenzdruckzuleitung 3 durch die Trocknungskammer 4 hindurch führt. Die Trocknungskammer 4 umfasst eine feuchteundurchlässige Wandung 52 und ein feuchteadsorbierendes Material 41, welches durch die Wandung von der Umgebung getrennt ist. Auf dem Abschnitt, welcher innerhalb der Trocknungskammer 4 liegt, weist die Referenzdruckzuleitung 3 zumindest teilweise eine feuchtedurchlässige Wandung 51 b auf, sodass feuchte Luft getrocknet wird, bevor sie wieder aus der Trocknungskammer 4 austritt und der Messkammer 2 zugeführt wird. Beispielsweise ist die Referenzdruckzuleitung 3 im Wesentlichen aus zwei Kapillaren aus luft- und feuchtedichtem Material, z.B. Glas, gefertigt, welche durch ein Zwischenstück aus einem feuchtedurchlässigen Material, z.B. Silikon, miteinander verbunden sind. Dieses Zwischenstück ist von der Trocknungskammer 4 vollständig umschlossen, sodass keine Feuchte in den Innenraum des Gehäuses 12 gelangt.

In einer in der Fig. 3b dargestellten Variante des Ausführungsbeispiels aus Fig. 3a führt die Referenzdruckzuleitung 3 derart an der Trocknungskammer 4 vorbei, dass sie diese entlang einer Grenzfläche berührt. Entlang der Grenzfläche weisen die Trocknungskammer 4 und die Referenzdruckzuleitung 3 ein feuchtedurchlässiges Material auf, sodass die in der Referenzdruckzuleitung 3 befindliche Luft auf der Strecke entlang der Grenzfläche getrocknet wird.

In Fig. 4 ist ein Schnitt durch einen erfindungsgemäßen Relativdrucksensor dargestellt. Die Messkammer 2 mit einer dem Prozessdruck ausgesetzten Membran bildet an einem Endbereich des rohrförmigen Gehäuses 12 den Abschluss. Oberhalb der Messkammer 2 ist ein Innengehäuse 13 in das Gehäuse 12 eingesetzt, welches die Sensorelektronik 14 sowie die Trocknungskammer 4 beherbergt. Die Referenzdruckzuleitung 3 gliedert sich in eine lange, mehrere Windungen aufweisende, Eingangskapillare 33 und einen im Wesentlichen geraden Abschnitt innerhalb des Innengehäuses 13. Durch die spiralförmige Anordnung der Eingangskapillare 33 wird erreicht, dass die Eingangskapillare 33 eine große Länge besitzen kann und trotz ihrer großen Länge auf wenig Raum unterbringbar ist. Selbstverständlich sind neben der spiralförmigen Anordnung auch andere Ausführungen der Eingangskapillare 33 innerhalb und außerhalb des Gehäuses 12 denkbar. Die große Länge der Eingangskapillare 33 dient als Puffer bei hohen Druckschwankungen, sodass vermieden wird, dass noch nicht getrocknete Luft in die Messkammer 2 gelangt. Bevorzugt schließt sich eine derartige lange Eingangskapillare 33 an alle in den vorangehenden Figuren beschriebenen Referenzdruckzuleitungen 3 an, um das jeweilige Trocknungssystem effizienter zu gestalten. Auf eine derartige Ausgestaltung kann verzichtet werden, wenn die Trocknungskammer 4 austauschbar ist und es keine Rolle spielt, wenn sie schnell gesättigt ist.

Die Trocknungskammer 4 ist in diesem Ausführungsbeispiel von zylindrischer Form und umschließt die Sensorelektronik 14. Die Form der Trocknungskammer 4 ist jedoch nicht auf die zylindrische Ausführung beschränkt. Weiterhin ist die Trocknungskammer 4 mit einem feuchteadsorbierenden Material 41 gefüllt. Alternativ ist die Trocknungskammer 4 ein Sinterkörper aus einem feuchteadsorbierenden Material 41, wobei dessen Außenflächen von einer feuchteundurchlässigen Wandung 52 umgeben sind. Diese dient dazu, dass das feuchteadsorbierende Material 41 nicht bereits bei der Montage des Messgerätes Feuchte aus der Umgebung aufnimmt. Die innere Wandung, welche der Sensorelektronik 14 zugewandt ist, ist feuchtedurchlässig, sodass der Raum um die Sensorelektronik 14 getrocknet wird.

Die Referenzdruckzuleitung 3 führt durch die Trocknungskammer 4 hindurch, wobei die Referenzdruckzuleitung 3 in dem Abschnitt, in welchem sie sich innerhalb der Trocknungskammer 4 befindet, eine feuchtedurchlässige Wandung 51b, beispielsweise aus Silikon, PVC oder PTFE aufweist. Auf der übrigen Länge besteht die Referenzdruckzuleitung 3 aus einem feuchte- und luftdichten Material. Die Luft, welche von außerhalb des Relativdrucksensors 1 in die Referenzdruckzuleitung 3 gelangt, kann daher nicht in das Gehäuse 12 gelangen, wodurch ein Niederschlag von Feuchte vermieden wird. Innerhalb der Trocknungskammer 4 wird der feuchten Luft Wasser entzogen und in dem feuchteadsorbierenden Material 41 gespeichert, sodass die Luft, welche in die Messkammer 2 gelangt, trocken ist. Da Niederschlag von Feuchte in der Messkammer 2 hiermit vermieden ist, ermöglicht dieser Aufbau eine zuverlässige und genaue Druckbestimmung.

Das Volumen, welches von der Referenzdruckzuleitung 3 im Bereich zwischen dem Eingang und dem Beginn der Trocknungskammer eingeschlossen ist, ist in dieser Ausgestaltung größer als das Volumen im Bereich der Trocknungskammer bis hin zur Messkammer. Das Volumen, welches der Referenzdruckzuleitung 3 durch die Trocknungskammer 4 hinzugefügt wird, ist sehr gering, sodass bei einer starken Luftkomprimierung auf Grund ausgeprägter Temperatursprünge die Trocknungskammer 4 nicht plötzlich eine große Menge an ungetrockneter Luft aufnimmt. Dies würde zu einer deutlichen Verringerung der Lebensdauer der Trocknungskammer 4 führen, da diese durch die Zeitdauer bis zur vollständigen Sättigung des feuchteadsorbierenden Materials bestimmt ist. Je mehr Austauschvolumen das feuchteadsorbierende Material 41 besitzt, desto schneller tritt die Sättigung ein.

Neben einem geringen Volumen der Trocknungskammer 4 lässt sich das Austauschvolumen durch eine Wandung oder Membran, welche das feuchteadsorbierende Material 41 von der Referenzdruckzuleitung 3 trennt, reduzieren. Durch die Optimierung der Wasserdurchlässigkeit bzw. der Diffusionsrate von Wassermolekülen durch die feuchtedurchlässige Wandung 51b ist zudem die Trocknungsgeschwindigkeit einer bestimmten Luftmenge einstellbar. Durch Einstellen einer optimalen Trocknungsrate ist zum einen gewährleistet, dass ein bestimmtes Luftvolumen zuverlässig getrocknet wird bevor es in die Messkammer 2 gelangt, und zum anderen ist die Lebensdauer der Trocknungskammer 4 bzw. des feuchteadsorbierenden Materials maximiert.

Das feuchteadsorbierende Material 41 ist nicht auf die Aufnahme von Feuchte beschränkt. In Abhängigkeit der Anwendung des Drucksensors 1 ist das feuchteadsorbierende Material 41 derart gewählt und/oder gefertigt, dass es neben Wasser auch andere Moleküle wie Ozon, Ammoniak, Schwefelwasserstoff, Fluorwasserstoff annimmt. Welche Moleküle adsorbiert werden hängt hierbei in erster Linie von der Größe der Hohlräume des Molekularsiebs, wie das feuchteadsorbierende Material 41 auch bezeichnet werden kann, ab. Insbesondere für den Fall, dass das feuchteadsorbierende Material 41 Zeolith ist, sind gezielt Hohlräume mit einem für die Aufnahme entsprechender Moleküle passenden Durchmesser herstellbar. Häufig wird aus in Pulverform vorliegendem Zeolith bei hohen Temperaturen von ca. 600-1000°C Granulat oder ein Sinterkörper hergestellt, da das Pulver gesundheitsschädlich ist. Eine andere Möglichkeit besteht darin, dass aus dem Zeolith- oder Silikagelpulver und einem Polymer ein Komposit, d.h. ein zweiphasiges festes Material hergestellt wird. Durch Beigabe von Stoffen, welche sich während des Sinterprozesses aus dem Material herauslösen bzw. verbrennen, kann auf die Größe der Hohlräume bzw. Poren Einfluss genommen werden. Ein solcher Stoffzusatz ist beispielsweise Ammoniumoxalat. Durch eine gezielte Porosität in der Zeolithkeramik kann die Adsorptionsgeschwindigkeit des Molekularsiebs eingestellt werden.

Das feuchteadsorbierende Material 41 der Trocknungskammer 4 ist nicht unbegrenzt lange einsetzbar, da es nach einer gewissen Zeit in Sättigung übergeht. Die Trocknungskammer 4 ist daher vorteilhaft als austauschbares Modul ausgestaltet. Alternativ oder zusätzlich ist eine zweite Trocknungskammer 4 in das Gehäuse 12 einbringbar, bevorzugt oberhalb des Innengehäuses 13, wobei die Referenzdruckzuleitung 3 an die zweite Trocknungskammer 4 entsprechend angepasst ist, damit auch hier eine Trocknung stattfindet. Der Vorteil bei einer außerhalb des Innengehäuses 13 liegenden Trocknungskammer 4 ist darin zu sehen, dass ein Austausch derselben ohne einen gleichzeitigen Austausch der Sensorelektronik erfolgen kann.

In der Fig. 4 nicht dargestellt ist der Messumformer, welcher im Wesentlichen weitere elektronische Komponenten beinhaltet, Anschlüsse zur Kommunikation zwischen dem Relativdrucksensor und einer übergeordneten Einheit, z.B. einer Leitwarte bereitstellt und bevorzugt über eine optische Anzeige zur Visualisierung z.B. des Gerätezustands oder der Messdaten verfügt. In einer vorteilhaften Weiterbildung der Erfindung ist im Messumformer ebenfalls eine Trocknungskammer 4 angeordnet. Somit umfasst der Relativdrucksensor 1 idealerweise drei Trocknungskammern 4, wobei jeweils eine im Messumformer, im Innengehäuse 13, und im Gehäuse 12 angeordnet ist. Ein aus einer höheren Anzahl an Gehäusen bestehender Drucksensor enthält eine entsprechend höhere Anzahl an Trocknungskammern 4, sodass die Komponenten eines jeden Gehäuses vor auskondensierender Feuchte geschützt sind.

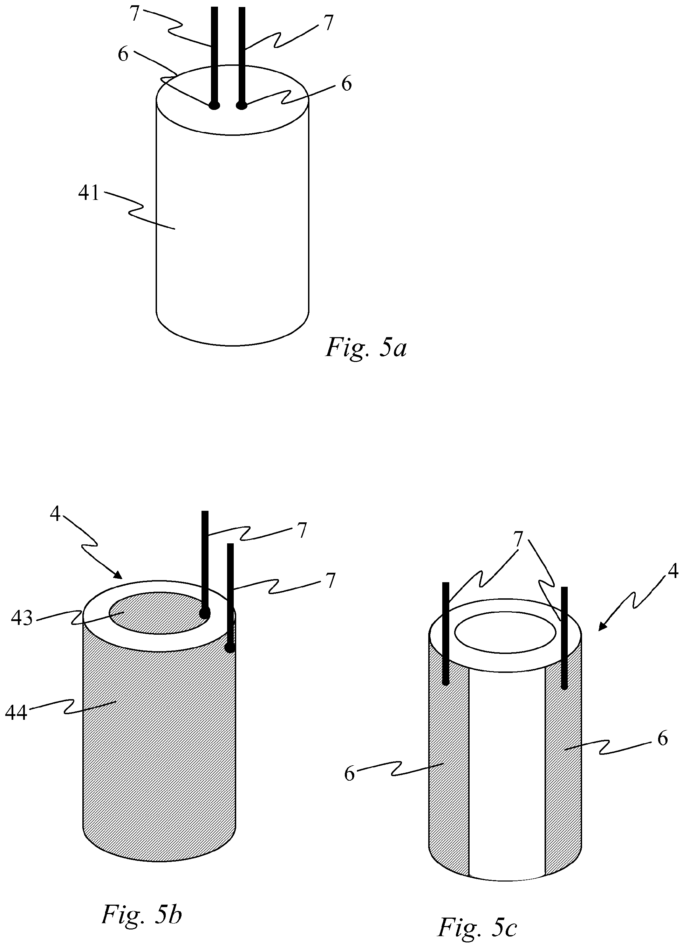

In Fig. 5a-c sind am Beispiel einer zylindrischen Trocknungskammer 4 verschiedene Anordnungsformen von Elektroden 6 gezeigt, mittels welchen der Sättigungsgrad der Trocknungskammer 4 durch ständige oder in kurzen Intervallen wiederholte Messungen überwachbar ist. Die in Fig. 5a-c dargestellten bevorzugten Ausführungsformen können jeweils auch Bestandteile eines größeren Formkörpers von komplexerer Struktur sein.

Bevorzugt sind die Elektroden 6 über elektrische Leitungen 7 mit der Sensorelektronik 14 verbunden, welche die Elektroden 6 mit einem Wechselstrom beaufschlagt und eine elektrische Kenngröße, beispielsweise den Verlustfaktor tanδ, ermittelt. Alternativ sind die Elektroden 6 einer separaten Elektronikeinheit zugeordnet. Aus der elektrischen Kenngröße ist der Sättigungsgrad des feuchteadsorbierenden Materials 41 der Trocknungskammer 4 ermittelbar. Bevorzugt wird der Sättigungsgrad regelmäßig bestimmt und ein Alarmsignal erzeugt, wenn ein bestimmter Sättigungsgrad, beispielsweise 90%, erreicht ist. Dieses Alarmsignal signalisiert zum Beispiel einer Leitwarte, dass ein Austausch des feuchteadsorbierenden Materials 41 erforderlich ist. Erfolgt ein entsprechender Austausch, ist gewährleistet, dass das zu schützende Element weiterhin geschützt wird und das Prozessgerät lückenlos zuverlässige Ergebnisse liefert. Zeolithen kann aufgenommene Feuchte durch Erhitzen wieder entzogen werden, sodass diese als Trocknungspatrone wieder verwendbar sind. Die Trocknungskammer 4 ermöglicht somit neben der Aufnahme des zu adsorbierenden Stoffes auch eine Zustandsdiagnose und hiermit eine Aussage über die verbleibende Lebensdauer als Adsorber. Dies ist im Zusammenhang mit Predictive Maintainance von großer Bedeutung.

Fig. 5a zeigt eine Ausführung, bei welcher die Elektroden 6 in das feuchteadsorbierende Material 41 eingebracht sind, beispielsweise in Form von metallisierten Bohrungen. Die Elektroden 6 sind mit elektrischen Leitungen 7 verbunden, über welche sie mit einem elektrischen Signal beaufschlagbar sind. Fig. 5b und 5c offenbaren vorteilhafte Ausgestaltungen der Elektroden 6 mit entsprechender elektrischer Kontaktierung, wobei die Elektroden 6 jeweils auf der Oberfläche der als Hohlzylinder dargestellten Trocknungskammer 4 aufgebracht sind.

In Fig. 5b sind die Außenfläche 44 und die Innenfläche 43 des Hohlzylinders mit einer elektrisch leitfähigen Beschichtung versehen, während die ringförmige Ober- und Unterseite jeweils frei von einer Beschichtung sind, sodass die Außenfläche 44 von der Innenfläche 43 elektrisch isoliert ist. Bei der Beschichtung handelt es sich bevorzugt um Silber, Gold, Platin oder Nickel. Geeignet sind alle Metalle mit guter Leitfähigkeit. Die Außenfläche 44 und die Innenfläche 43 sind jeweils durch eine elektrische Leitung 7, beispielsweise einen Draht, kontaktiert. Hierzu wird beispielsweise ein Koaxialkabel in einem Endbereich abisoliert und die Ader mit der Beschichtung der Innenfläche 43 verbunden, während der Schirm die beschichtete Außenfläche 44 kontaktiert.

Bei der in der Fig. 5c dargestellten Variante sind zwei Elektroden 6 in Form von einer streifenförmigen Beschichtung auf die Außenfläche 44 der Trocknungskammer 4 aufgebracht und durch elektrische Leitungen 7 kontaktiert. Die relative Anordnung der beiden Streifen zueinander ist hierbei beliebig wählbar. Obgleich die Streifen in dieser Ausgestaltung die gleiche Länge wie der Zylinder aufweisen, ist dies nicht zwingend der Fall; Streifen mit geringeren Abmessungen sind gleichermaßen geeignet.

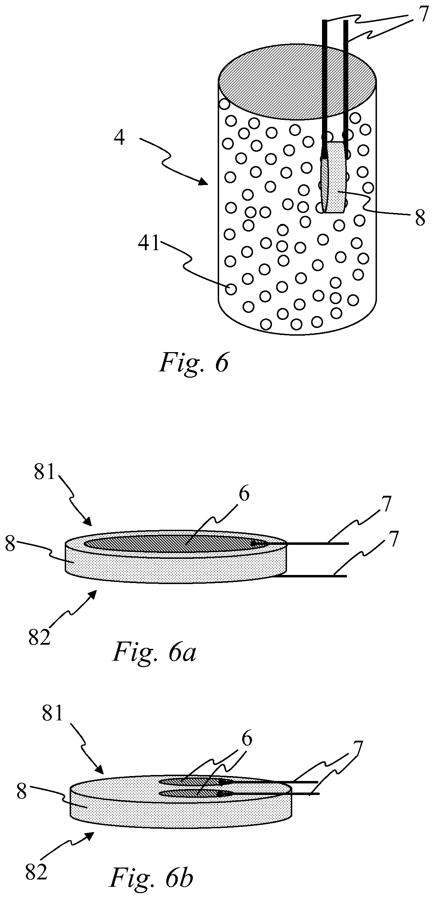

Fig. 6 zeigt eine Trocknungskammer 4, in welcher das feuchteadsorbierende Material 41 als Granulat enthalten ist, z.B. in Form von gesinterten Zeolithkügelchen. Die Wandung der Trocknungskammer 4 ist bevorzugt durchlässig für den zu adsorbierenden Stoff. Um den Sättigungsgrad des Granulats zu bestimmen, ist ein Formkörper 8 aus demselben feuchteadsorbierenden Material 41 in die Trocknungskammer 4 eingebracht, welcher mit Elektroden 6 versehen und an eine Elektronikeinheit anschließbar ist.

Die Fig. 6a und 6b zeigen bevorzugte Ausgestaltungen eines scheibenförmigen Formkörpers 8 zum Einbringen in ein Granulat oder Pulver. Selbstverständlich ist die Scheibenform nicht auf die Anwendung in einem Granulat beschränkt.

In Fig. 6a ist ein aus dem feuchteadsorbierenden Material 41 bestehender keramischer Formkörper 8 abgebildet, bei welchem die kreisförmige Oberseite 81 und Unterseite 82 jeweils mit einer Beschichtung versehen sind, welche die Elektroden 6 bilden und durch elektrische Leitungen 7 kontaktiert sind. Die Beschichtung ist flächig aufgebracht. Andere Ausführungen sind jedoch denkbar, bei welchen die Beschichtung eine ringförmige Fläche einnimmt.

Eine alternative Elektrodenanordnung zeigt Fig. 6b. Dort weist die kreisförmige Oberseite 81 des Formkörpers 8 eine Beschichtung in Form von zwei Streifen auf, während die Unterseite 82 frei von einer Beschichtung ist. Die Zuleitungen 7 zur Kontaktierung befinden sich entsprechend auf nur einer Seite des Formkörpers 8.

### Bezugszeichenliste

- 1: Relativdrucksensor
- 12: Gehäuse
- 13: Innengehäuse
- 14: Sensorelektronik
- 2: Messkammer
- 3: Referenzdruckzuleitung
- 31: erste Kapillare
- 32: zweite Kapillare
- 33: Eingangskapillare
- 4: Trocknungskammer
- 41: feuchteadsorbierendes Material
- 42: Hohlraum
- 43: Innenfläche
- 44: Außenfläche
- 51a: feuchtedurchlässige Wandung der Trocknungskammer/des feuchteadsorbierenden Materials
- 51b: feuchtedurchlässige Wandung der Referenzdruckzuleitung
- 52: feuchteundurchlässige Wandung
- 6: Elektrode
- 7: elektrische Leitung
- 8: Formkörper
- 81: Oberseite
- 82: Unterseite

## Patentansprüche

1. Relativdrucksensor (1) zur Bestimmung eines Drucks (p1) eines Mediums in Bezug auf einen Atmosphärendruck (p2),
mit einem Gehäuse (12),
mit einem Messelement (2), welches in dem Gehäuse angeordnet ist, wobei eine mit dem Medium in Kontakt stehende Außenseite des Messelements (2) mit dem zu messenden Druck (p1) beaufschlagt ist,
mit einer Referenzdruckzuleitung (3), welche einer Innenseite des Messelements (2) den Atmosphärendruck (p2) in Form von Umgebungsluft zuführt,
mit einer Auswerteeinheit, welche aus einer mit dem Messelement (2) bestimmten Größe den Druck (p1) des Mediums bestimmt,
und mit mindestens einer in dem Gehäuse (12) angeordneten Trocknungskammer (4) zur Aufnahme von Luftfeuchte,
wobei die Trocknungskammer (4) ein feuchteadsorbierendes Material (41) enthält oder im Wesentlichen aus dem feuchteadsorbierenden Material (41) besteht,
wobei das feuchteadsorbierende Material (41) zumindest abschnittsweise frei von einer Wandung ist,
**dadurch gekennzeichnet,**
**dass** die Referenzdruckzuleitung (3) zumindest abschnittsweise aus einem feuchtedurchlässigen Material gefertigt ist, sodass feuchte Luft, welche sich in der Referenzdruckzuleitung (3) befindet, in Kontakt mit der Trocknungskammer (4) steht,
wobei die Trocknungskammer (4) derart ausgestaltet ist, dass sie eine im Gehäuse (12) angeordnete Sensorelektronik (14) zumindest teilweise umgibt.

2. Relativdrucksensor (1) nach Anspruch 1,
**dadurch gekennzeichnet,**
**dass** die Referenzdruckzuleitung (3) mit einem Abschnitt innerhalb der Trocknungskammer (4) liegt, und dass der in der Trocknungskammer (4) befindliche Abschnitt der Referenzdruckzuleitung (3) das feuchtedurchlässige Material aufweist.

3. Relativdrucksensor (1) nach Anspruch 1,
**dadurch gekennzeichnet,**
**dass** die Trocknungskammer (4) und die Referenzdruckzuleitung (3) abschnittsweise eine gemeinsame Grenzfläche aufweisen, und dass das feuchteadsorbierende Material (41) und das feuchtedurchlässige Material die Grenzfläche bilden.

4. Relativdrucksensor (1) nach einem der Ansprüche 1-3,
**dadurch gekennzeichnet,**
**dass** die Trocknungskammer (4) in Form eines Einsatzes in das Gehäuse (12) einbringbar ist und/oder austauschbar ist.

5. Relativdrucksensor (1) nach einem der vorangehenden Ansprüche,
**dadurch gekennzeichnet,**
**dass** die Trocknungskammer (4) das feuchteadsorbierende Material (41) als Formkörper oder in granularer Form enthält oder
**dass** die Trocknungskammer (4) ein Sinterkörper oder ein Kompositkörper aus dem feuchteadsorbierenden Material (41) ist.

6. Relativdrucksensor (1) nach einem der vorangehenden Ansprüche,
**dadurch gekennzeichnet,**
**dass** die Referenzdruckzuleitung (3) eine Länge aufweist, welche eine Länge des Gehäuses deutlich übersteigt.

7. Relativdrucksensor (1) nach Anspruch 9,
**dadurch gekennzeichnet,**
**dass** die Referenzdruckzuleitung (3) zumindest abschnittsweise spiralförmig ausgestaltet ist.

8. Relativdrucksensor (1) nach mindestens einem der vorangehenden Ansprüche,
**dadurch gekennzeichnet,**
**dass** das in der Trocknungskammer (4) enthaltene feuchteadsorbierende Material (41) ein Zeolith oder ein Silikagel ist.

9. Relativdrucksensor (1) nach mindestens einem der vorangehenden Ansprüche,
**dadurch gekennzeichnet,**
**dass** das erste und das zweite feuchtedurchlässige Material ausgewählt sind aus der Gruppe der Polymermaterialien.

10. Relativdrucksensor (1) nach mindestens einem der vorangehenden Ansprüche,
**dadurch gekennzeichnet,**
**dass** das in der Trocknungskammer (4) enthaltene feuchteadsorbierende Material (41) neben Feuchte auch O₃, NH₃, H₂S und/oder HF adsorbiert.

11. Relativdrucksensor (1) nach mindestens einem der vorangehenden Ansprüche,
**dadurch gekennzeichnet,**
**dass** der Relativdrucksensor mehrere Gehäuse (12, 13) umfasst, und dass in jedes Gehäuse (12, 13) mindestens eine Trocknungskammer (4) eingebracht ist.

12. Relativdrucksensor (1) nach mindestens einem der vorangehenden Ansprüche,
**dadurch gekennzeichnet,**
**dass** die Trocknungskammer (4) mindestens zwei Elektroden (6) aufweist, dass der Trocknungskammer (4) eine Elektronikeinheit zugeordnet ist, weiche die Elektroden (6) mit einem Wechselstrom beaufschlagt und hiermit eine elektrische Kenngröße des feuchteadsorbierenden Materials (41) ermittelt, und dass die Elektronikeinheit anhand der ermittelten elektrischen Kenngröße den Sättigungsgrad des feuchteadsorbierenden Materials (41) bestimmt.

## Claims

1. Relative pressure sensor (1) for determining a pressure (p1) of a medium in relation to an atmospheric pressure (p2),
with a housing (12),
with a measuring element (2), which is arranged in the housing, wherein an exterior side of the measuring element (2) that is in contact with the medium is subjected to the pressure (p1) to be measured,
with a reference pressure supply line (3), which supplies the atmospheric pressure (p2), in the form of ambient air, to an interior side of the measuring element (2),
with an evaluation unit, which determines the pressure (p1) of the medium from a variable determined with the measuring element (2),
and with at least a drying chamber (4) that is arranged in the housing (12) and designed to absorb the air humidity
wherein the drying chamber (4) contains a material that adsorbs moisture (41) or essentially consists of a material that adsorbs moisture (41),
wherein the material that adsorbs moisture (41) is free from a wall at least in part,
**characterized in that**
the reference pressure supply line (3) is fabricated at least in part from a material that is permeable to moisture such that humid air located in the reference pressure supply line (3) is in contact with the drying chamber (4),
wherein the drying chamber (4) is designed in such a way that it at least partially surrounds a sensor electronics module (14) arranged in the housing (12).

2. Relative pressure sensor (1) as claimed in Claim 1,
**characterized in that**
one section of the reference pressure supply line (3) is located inside the drying chamber (4), and **in that** the section of the reference pressure supply line (3) located in the drying chamber (4) features the material that is permeable to moisture.

3. Relative pressure sensor (1) as claimed in Claim 1,
**characterized in that**
the drying chamber (4) and the reference pressure supply line (3) have a common interface in sections, and **in that** the material that adsorbs moisture (41) and the material that is permeable to moisture form the interface.

4. Relative pressure sensor (1) as claimed in Claims 1 to 3,
**characterized in that**
the drying chamber (4) can be introduced into the housing (12) in the form of an insert, and/or is replaceable.

5. Relative pressure sensor (1) as claimed in one of the previous claims,
**characterized in that**
the drying chamber (4) contains the material that adsorbs moisture (41) as a molded body or in granular form, or
**in that** the drying chamber (4) is a sintered body or a composite body made from the material that adsorbs moisture (41).

6. Relative pressure sensor (1) as claimed in one of the previous claims,
**characterized in that**
the reference pressure supply line (3) has a length which significantly exceeds a length of the housing.

7. Relative pressure sensor (1) as claimed in Claim 9,
**characterized in that**
the reference pressure supply line (3) is at least partially designed as a spiral.

8. Relative pressure sensor (1) as claimed in at least one of the previous claims,
**characterized in that**
the material that adsorbs moisture (41) that is contained in the drying chamber (4) is a zeolite or a silica gel.

9. Relative pressure sensor (1) as claimed in at least one of the previous claims,
**characterized in that**
the first and second material that are permeable to moisture are selected from a group of polymer materials.

10. Relative pressure sensor (1) as claimed in at least one of the previous claims,
**characterized in that**
the material that adsorbs moisture (41) that is contained in the drying chamber (4) also adsorbs O₃, NH₃, H₂S and/or HF in addition to moisture.

11. Relative pressure sensor (1) as claimed in at least one of the previous claims,
**characterized in that**
the relative pressure sensor comprises several housings (12, 13), and **in that** at least one drying chamber (4) is introduced into each housing (12, 13).

12. Relative pressure sensor (1) as claimed in at least one of the previous claims,
**characterized in that**
the drying chamber (4) has at least two electrodes (6),
an electronics unit is assigned to the drying chamber (4), said unit subjecting the electrodes (6) to an alternating current and determining, on this basis, an electric characteristic variable of the material that adsorbs moisture (41), and
**in that** the electronics unit determines the degree of saturation of the material that adsorbs moisture (41) on the basis of the electric characteristic variable that is determined.

## Revendications

1. Capteur de pression relative (1) destiné à la détermination d'une pression (p1) d'un produit par rapport à une pression atmosphérique (p2),
avec un boîtier (12),
avec un élément de mesure (2), lequel est disposé dans le boîtier, une face extérieure de l'élément de mesure (2), laquelle est en contact avec le produit, étant soumise à la pression à mesurer (p1),
avec une conduite de pression de référence (3), laquelle achemine à une face intérieure de l'élément de mesure (2) la pression atmosphérique (p2) sous la forme d'air ambiant,
avec une unité d'exploitation, laquelle détermine la pression (p1) du produit à partir d'une grandeur déterminée avec l'élément de mesure (2),
et avec au moins une chambre de séchage (4), disposée dans le boîtier (12), destinée à absorber l'humidité de l'air,
la chambre de séchage (4) contenant un matériau adsorbant l'humidité (41) ou étant constituée pour l'essentiel d'un matériau adsorbant l'humidité (41),
le matériau adsorbant l'humidité (41) ne présentant au moins partiellement pas de paroi,
**caractérisé**
**en ce que** la conduite de référence de pression (3) est fabriquée au moins partiellement à partir d'un matériau perméable à l'humidité, si bien que l'air humide, qui se trouve dans la conduite de pression de référence (3), est en contact avec la chambre de séchage (4),
la chambre de séchage (4) étant conçue de telle sorte à ce qu'elle entoure au moins partiellement une électronique de capteur (14) disposée dans le boîtier (12).

2. Capteur de pression relative (1) selon la revendication 1,
**caractérisé**
**en ce qu'**une partie de la conduite de pression de référence (3) pénètre à l'intérieur de la chambre de séchage (4), et en ce que la partie de la conduite de pression de référence (3) se trouvant dans la chambre de séchage (4) est constituée d'un matériau perméable à l'humidité.

3. Capteur de pression relative (1) selon la revendication 1,
**caractérisé**
**en ce que** la chambre de séchage (4) et la conduite de pression de référence (3) présentent en partie une interface commune, et en ce que le matériau adsorbant l'humidité (41) et le matériau perméable à l'humidité forment l'interface.

4. Capteur de pression relative (1) selon l'une des revendications 1 à 3,
**caractérisé**
**en ce que** la chambre de séchage (4) se présente sous forme d'insert et peut être montée et/ou remplacée dans le boîtier (12).

5. Capteur de pression relative (1) selon l'une des revendications précédentes,
**caractérisé**
**en ce que** la chambre de séchage (4) contient le matériau adsorbant l'humidité (41) en tant que corps moulé ou sous forme granulaire, ou
**en ce que** la chambre de séchage (4) est un corps fritté ou un corps composite constitué d'un matériau adsorbant l'humidité (41).

6. Capteur de pression relative (1) selon l'une des revendications précédentes,
**caractérisé**
**en ce que** la conduite de pression de référence (3) présente une longueur dépassant nettement une longueur du boîtier.

7. Capteur de pression relative (1) selon la revendication 9,
**caractérisé**
**en ce que** la conduite de pression de référence (3) est conçue au moins partiellement en forme de spirale.

8. Capteur de pression relative (1) selon au moins l'une des revendications précédentes,
**caractérisé**
**en ce que** le matériau adsorbant l'humidité (41), contenu dans la chambre de séchage (4), est un zéolithe ou un silicagel.

9. Capteur de pression relative (1) selon au moins l'une des revendications précédentes,
**caractérisé**
**en ce que** le premier et le deuxième matériau perméables à l'humidité sont issus d'un groupe de matériaux polymères.

10. Capteur de pression relative (1) selon au moins l'une des revendications précédentes,
**caractérisé**
**en ce que** matériau adsorbant l'humidité (41), contenu dans la chambre de séchage (4), adsorbe outre l'humidité également l'O₃, le NH₃, le H₂S et/ou le HF.

11. Capteur de pression relative (1) selon au moins l'une des revendications précédentes,
**caractérisé**
**en ce que** le capteur de pression relative comprend plusieurs boîtiers (12, 13), et en ce qu'au moins une chambre de séchage (4) peut être insérée dans chaque boîtier (12, 13).

12. Capteur de pression relative (1) selon au moins l'une des revendications précédentes,
**caractérisé**
**en ce que** la chambre de séchage (4) comporte au moins deux électrodes (6), en ce qu'est attribuée à la chambre de séchage (4) une unité électronique, laquelle alimente les électrodes (6) avec un courant alternatif et détermine par ce biais une valeur caractéristique électrique du matériau adsorbant l'humidité (41),
et
**en ce que** l'unité électronique détermine sur la base de la valeur caractéristique électrique le degré de saturation du matériau (41) adsorbant l'humidité.
